# FASCICULE DE BREVET EUROPEEN

(11) **EP 3 901 016 B1**
(45) Date de publication et mention de la délivrance du brevet: **09.08.2023**
(21) Numéro de dépôt: 21169735.4
(22) Date de dépôt: 21.04.2021
(51) Int. Cl.: B62J 27/20, B62K 21/26, B62J 45/41, B62J 45/422, A41D 13/018, B60R 21/013, B60R 21/00

(54) **SYSTÈME DE PROTECTION D'UN UTILISATEUR, ENSEMBLE ET UTILISATION D'UN TEL SYSTÈME DE PROTECTION**
SCHUTZSYSTEM EINES NUTZERS, EINHEIT UND ANWENDUNG EINES SOLCHEN SCHUTZSYSTEMS
SYSTEM FOR PROTECTING A USER, ASSEMBLY AND USE OF SUCH A PROTECTION SYSTEM

(30) Priorité: 21.04.2020 FR 2003979
(43) Date de publication de la demande: 27.10.2021
(73) Titulaire: Helite, 21121 Fontaine-les-Dijon (FR)
(72) Inventeur: THEVENOT, Gérard, 21380 MESSIGNY ET VANTOUX (FR); CAUZA, Chiril, 21121 Fontaine les Dijon (FR); PINTO, Patrick, 71230 POUILLOUX (FR); JOLIS, Swann, 74960 MEYTHET (FR); LAYLE, Barbara, 21600 LONGVIC (FR); QUEDDIS, Hicham, 21000 DIJON (FR); MAIRET, Isabelle, 21800 QUETIGNY (FR); BEGUE, Emmanuelle, 21600 FENAY (FR); AFONSO, Marie-Hélène, 21000 DIJON (FR); PONCET, Xavier, 74330 LA BALME DE SILLINGY (FR); WEBER, Antoine, 21121 Poiseul les Saulx (FR)
(74) Mandataire: Plasseraud IP

(56) Documents cités:
- WO-A1-2019/188418
- CN-A- 107 280 102
- CN-U- 202 407 623
- DE-U1- 29 521 373
- ES-U- 1 037 326
- JP-A- 2011 051 367

## Description

### Domaine technique

La présente divulgation relève du domaine des systèmes de protection d'un utilisateur.

Elle s'applique aux systèmes de protection d'un utilisateur circulant sur un véhicule pourvu d'un organe de direction, lequel organe de direction est configuré pour modifier une direction de déplacement du véhicule.

### Technique antérieure

La densification de la circulation et le besoin d'optimisation des temps de trajet sur de courtes distances en milieu urbain conduit à un accroissement considérable du nombre d'utilisateurs de véhicule en tout genre et à une hausse des accidents de la circulation.

Pour protéger les utilisateurs de ces véhicules, il est connu d'avoir recours à des systèmes de protection de type airbag. Un tel système de protection met en oeuvre une structure de protection gonflable qui est dégonflée dans un état inactif, et qui peut être gonflée dans un état actif pour protéger au moins une partie du corps de l'utilisateur lorsqu'une situation d'accident est détectée. Ces systèmes de protection particulièrement répandus pour les véhicules automobiles s'appliquent également aux véhicules à deux ou trois roues dans lesquels l'organe de direction est un guidon de direction pourvu de deux poignées saisies par les mains de l'utilisateur tels que les motos, scooters, mobylettes mais également les vélos ou encore les trottinettes.

Des systèmes de protection de ce type sont décrits notamment dans les documents JP 2011-051367, CN 107 280 102, DE 295 21 373, WO 2019/188418, ES 1 037 326. Le document JP 2011-051367 divulgue un système de protection selon le préambule de la revendication 1.

L'efficacité de la protection repose sur un déclenchement rapide et précis du système de protection pour faire passer la structure de protection de l'état inactif à l'état actif. Un tel déclenchement est conditionné notamment par une détection fiable de la situation d'accident.

La détection de la situation d'accident est réalisée au moyen d'un dispositif de détection configuré pour détecter un ou plusieurs paramètres d'actionnement représentatif de la situation d'accident. Le paramètre d'actionnement est généralement une décélération rapide du véhicule.

Dans certaines situations d'accident, cette décélération peut toutefois ne pas être suffisante pour déclencher le système de protection. La détection de la situation d'accident manque alors de fiabilité.

### Résumé

La présente divulgation vise à résoudre le problème précité.

Selon un premier aspect, il est proposé un système de protection d'un utilisateur selon la revendication 1.

Le système de protection permet de détecter et prendre en considération la perte de contrôle du véhicule pour faire passer la structure de protection de l'état inactif à l'état actif, améliorant ainsi la détection de la situation d'accident.

Le capteur électronique peut être un capteur optique présentant une surface de détection et configuré pour détecter une modification d'intensité lumineuse sur la surface de détection, l'unité de commande étant configurée pour émettre le signal d'actionnement lorsqu'une modification d'intensité lumineuse sur la surface de détection est détectée.

Le capteur optique permet une détection sur une grande plage de distance, sans nécessité de contact direct. Par exemple, si le capteur optique est dirigé vers la paume de la main, il y aura détection même en position de montée ou d'accélération alors que la paume est décollée et seul les doigts sont en pression sur l'avant de la poignée. Le capteur optique permet un réglage plus simple de la détection du lâcher de guidon et présente une sensibilité réduite à l'environnement extérieur (humidité, poussière, etc.). Le capteur optique offre, par ailleurs, une consommation d'énergie réduite.

L'organe de direction peut être un guidon de direction pourvu de deux poignées destinées à être saisies par les mains de l'utilisateur, le système de protection comprenant deux manchons de fixation configurés pour être montés de manière amovible respectivement sur les poignées, le boîtier étant configuré pour être monté de manière amovible sur une partie centrale du guidon de direction.

Selon un deuxième aspect, il est proposé un ensemble comprenant un véhicule et un système de protection tel que défini précédemment, le véhicule étant pourvu d'un organe de direction configuré pour modifier une direction de déplacement du véhicule.

Le véhicule peut comprendre une assise destinée à recevoir l'utilisateur, le capteur électronique étant monté sur l'organe de direction et la surface de détection étant orientée vers l'assise du véhicule.

L'organe de direction peut être un guidon de direction pourvu de deux poignées destinées à être saisies par les mains de l'utilisateur, le véhicule comportant un châssis s'étendant selon une direction longitudinale et présentant une partie avant pourvue d'un pivot, et une roue directrice montée pivotante sur le guidon de direction selon un axe de roue perpendiculaire à la direction de déplacement, le guidon de direction étant monté pivotant sur le pivot du châssis.

Selon un troisième aspect, il est proposé une utilisation d'un système de protection tel que défini précédemment pour protéger un utilisateur circulant sur un véhicule pourvu d'un organe de direction, l'organe de direction étant configuré pour modifier une direction de déplacement du véhicule, l'utilisation prévoyant de :
- laisser la structure de protection dans l'état inactif tant qu'aucune situation d'accident n'est détectée, et
- faire passer la structure de protection dans l'état actif lorsqu'une situation d'accident est détectée, le dispositif de détection détectant une perte de contrôle du véhicule comme paramètre d'actionnement représentatif de la situation d'accident, lorsque l'utilisateur lâche l'organe de direction pendant une durée déterminée alors que le véhicule est en déplacement.

### Brève description des dessins

D'autres caractéristiques, détails et avantages apparaîtront à la lecture de la description détaillée ci-après, et à l'analyse des dessins annexés, sur lesquels :

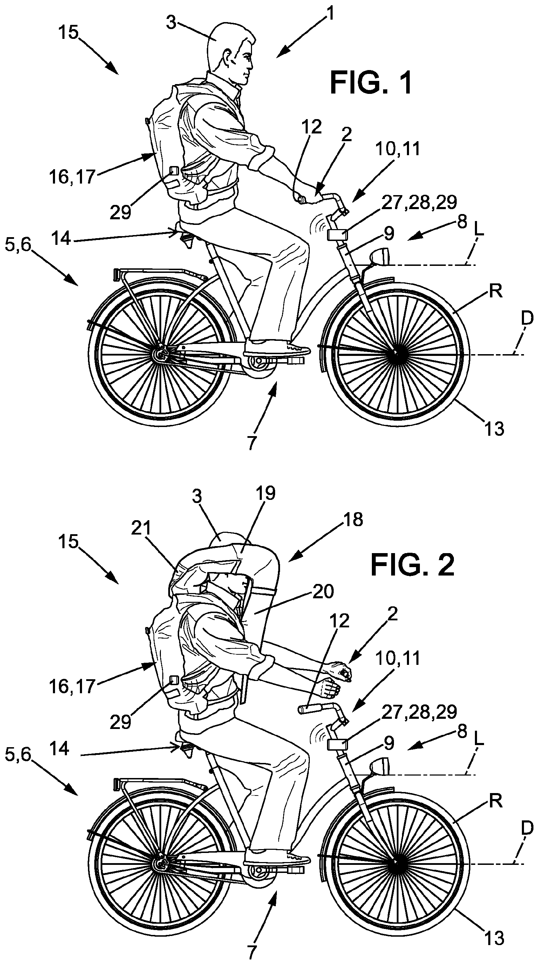

- la figure 1 montre un ensemble comprenant un vélo et un système de protection sous la forme d'un support, tel qu'un sac à dos, porté par l'utilisateur du vélo, le système de protection comprenant une structure de protection gonflable et un dispositif d'actionnement connecté à une structure de protection, la structure de protection étant dans un état inactif dans lequel elle est dégonflée, aucune situation d'accident n'étant détectée par le dispositif d'actionnement,

- la figure 2 montre l'ensemble de la figure 1 dans lequel la structure de protection étant dans un état actif dans lequel elle est gonflée pour protéger au moins une partie du corps de l'utilisateur, le dispositif de détection ayant détecté un paramètre d'actionnement représentatif de la situation d'accident, le paramètre d'actionnement comprenant une perte de contrôle du véhicule, lorsque l'utilisateur lâche l'organe de direction pendant une durée déterminée alors que le véhicule est en déplacement,

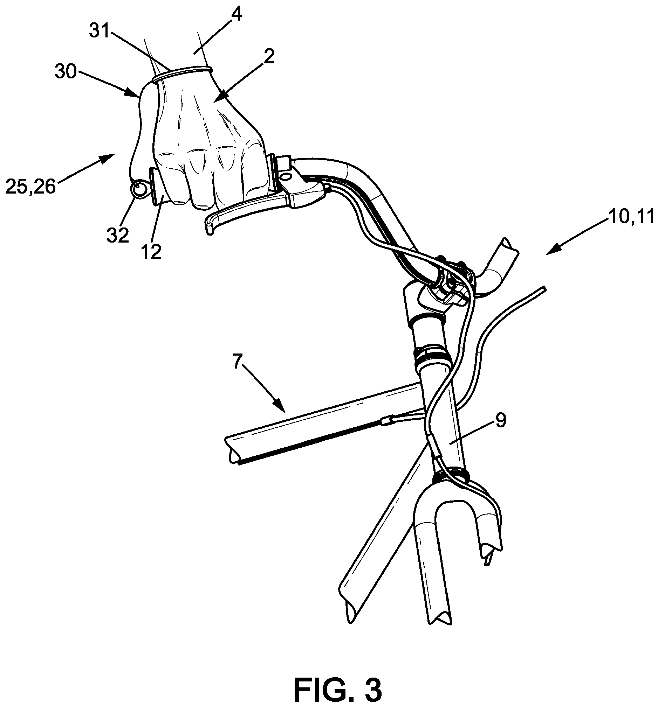

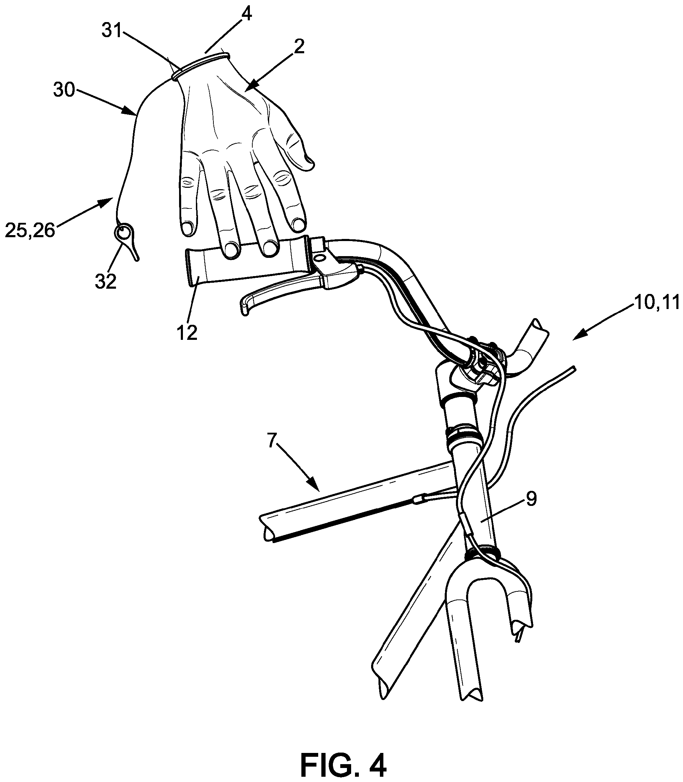

- les figures 3 et 4 montrent un dispositif de détection de l'ensemble de la figure 1 selon un exemple ne faisant pas partie de l'invention, le dispositif de détection comprenant un lien configuré pour être attaché à l'organe de direction et à une partie d'attache de l'utilisateur située aux poignets de l'utilisateur, et être détaché de l'organe de direction, le paramètre d'actionnement comprenant le lien détaché de l'organe de direction et de la partie d'attache,

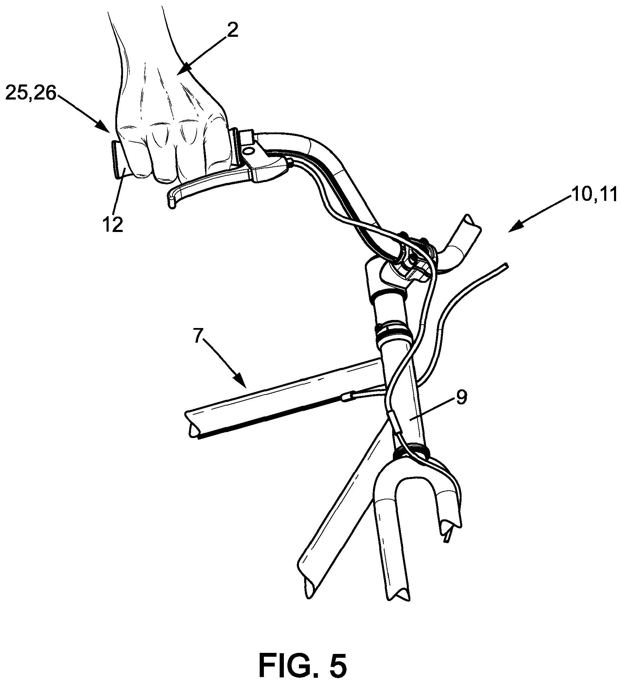

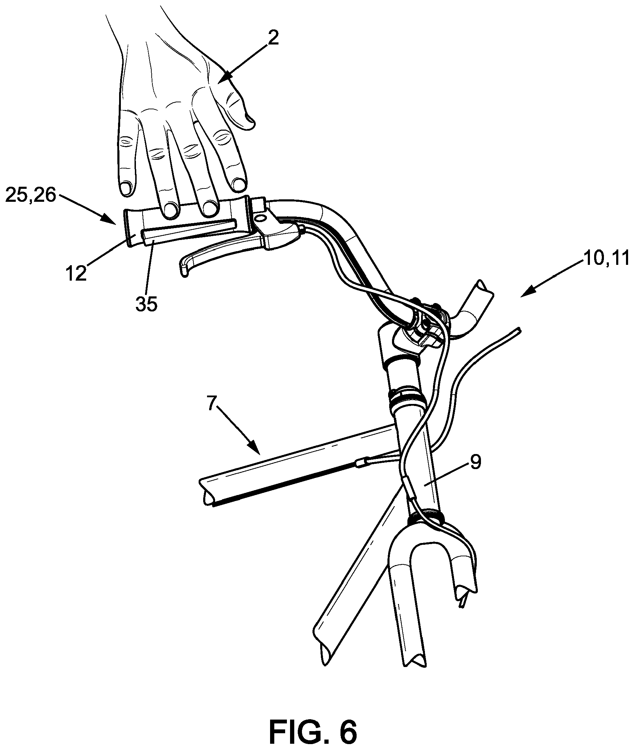

- les figures 5 et 6 montrent un dispositif de détection de l'ensemble de la figure 1 selon un exemple ne faisant pas partie de l'invention, le dispositif de détection comprenant un actionneur actionnable par l'utilisateur, l'actionneur étant déplaçable entre une position de contact lorsque l'utilisateur tient l'organe de direction et une position relâchée lorsque l'utilisateur lâche l'organe de direction, l'actionneur étant rappelé élastiquement vers la position relâchée, le paramètre d'actionnement comprenant l'actionneur dans la position relâchée,

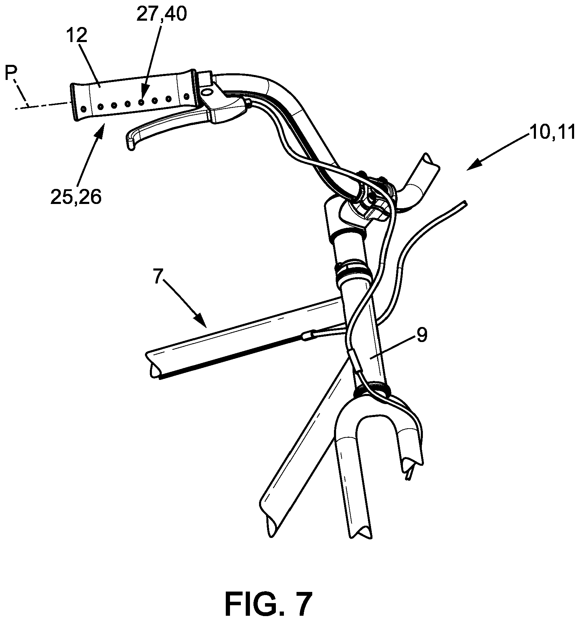

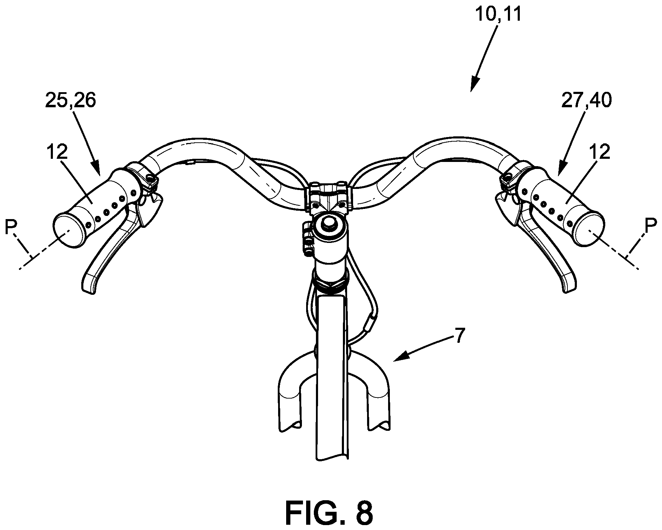

- les figures 7 et 8 montrent un dispositif de détection de l'ensemble de la figure 1 selon un exemple ne faisant pas partie de l'invention, le dispositif de détection comprenant un organe de détection de contact électronique configuré pour délivrer un signal d'actionnement représentatif d'une absence de contact des deux mains de l'utilisateur avec l'organe de direction, l'organe de détection de contact comprenant une pluralité de capteurs électroniques agencés selon deux lignes de contact de part et d'autre de l'organe de direction, le paramètre d'actionnement comprenant le signal d'actionnement,

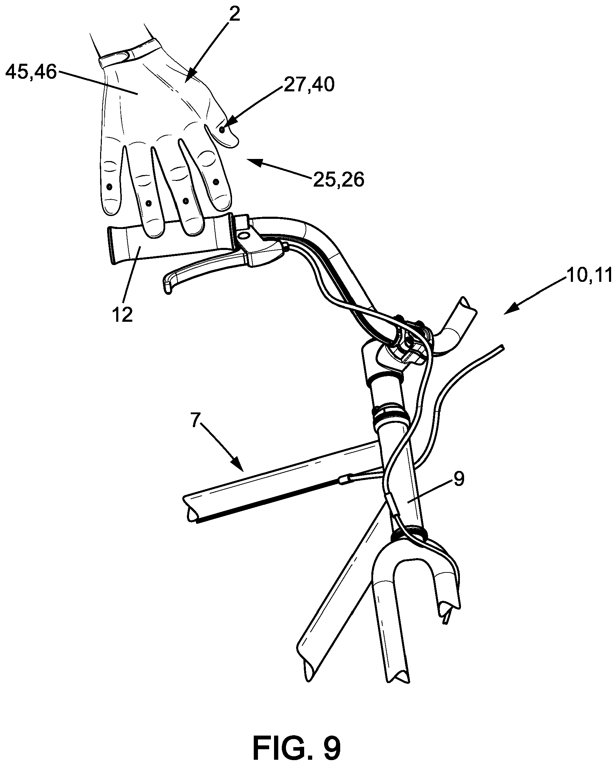

- la figure 9 montre un dispositif de détection de l'ensemble de la figure 1 selon une variante de l'exemple des figures 7 et 8, le dispositif de détection comprenant un équipement, tel que des gants, porté par l'utilisateur et sur lesquels l'organe de détection de contact, sous la forme d'une pluralité de capteurs électroniques, est placé,

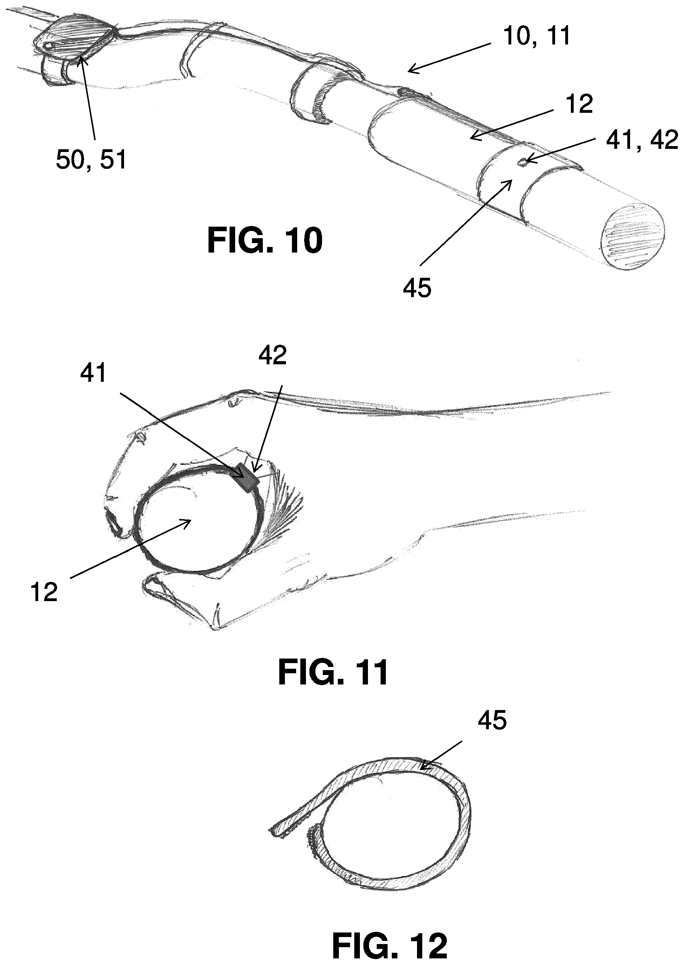

- les figures 10 à 12 montrent un dispositif de détection de l'ensemble de la figure 1 selon un mode de réalisation de l'invention, le dispositif de détection comprenant un organe de détection de contact électronique configuré pour délivrer un signal d'actionnement représentatif d'une absence de contact des deux mains de l'utilisateur avec l'organe de direction, l'organe de détection de contact comprenant un capteur optique fixé sur un manchon de fixation monté de manière amovible sur l'organe de direction, une unité de commande électronique étant enfermée dans un boitier monté de manière amovible sur l'organe de direction,

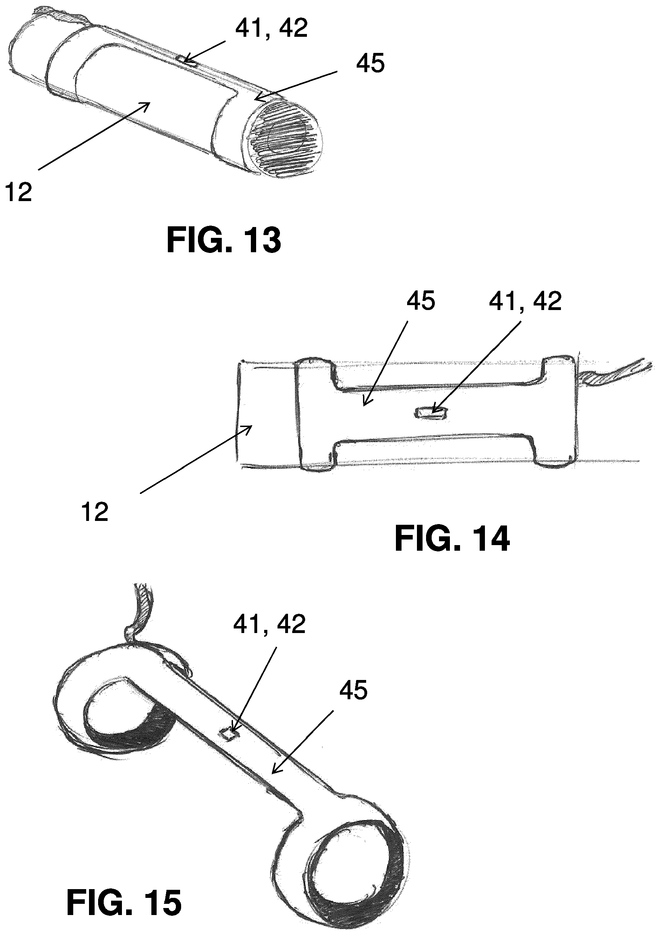

- les figures 13 à 15 montrent un dispositif de détection de l'ensemble de la figure 1 selon une variante du mode de réalisation de l'invention.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Les figures 1 et 2 représentent un utilisateur 1 sur un véhicule 5 pourvu d'un organe de direction 10 configuré pour modifier une direction de déplacement D du véhicule 5. Dans le mode de réalisation représenté, le véhicule 5 est un vélo 6 dans lequel l'organe de direction 10 est un guidon de direction 11 pourvu de deux poignées 12 destinées à être saisies par les mains 2 de l'utilisateur 1. Le vélo 6 comporte un châssis 7 s'étendant selon une direction longitudinale L et présentant une assise 14 destinée à recevoir l'utilisateur 1, et une partie avant 8 pourvue d'un pivot 9. Le guidon de direction 11 est monté pivotant sur le pivot 9 du châssis 7 et une roue directrice 13 est montée pivotante sur le guidon de direction 11 selon un axe de roue R perpendiculaire à la direction de déplacement D. L'utilisateur 1 peut ainsi modifier la direction de déplacement D en tournant le guidon de direction 11.

L'invention décrite en relation avec un vélo 6 s'applique à tout autre véhicule 5 pourvu d'un guidon de direction 11 et tout particulièrement à une trottinette mais également une motocyclette, un scooter, une mobylette ou autre. Elle s'applique également plus généralement à tout type de véhicule 5 pourvu d'un organe de direction 10 tel qu'une automobile, un camion ou autre.

Pour protéger l'utilisateur 1, un système de protection 15 de type airbag est prévu. Ce système de protection 15 met en oeuvre une structure de protection 18 gonflable qui est dégonflée dans un état inactif visible sur la figure 1, et qui peut être gonflée dans un état actif visible sur la figure 2 de telle manière qu'elle protège au moins une partie du corps de l'utilisateur 1 lorsqu'une situation d'accident est détectée.

Dans le mode de réalisation représenté, le système de protection 15 comprend un support 16 sous la forme d'un sac à dos 17 porté par l'utilisateur 1 du vélo. La structure de protection 18 est montée sur le sac à dos 17 en étant repliée sur le sac à dos 17 dans l'état inactif et déployée par rapport au sac à dos 17 dans l'état actif. Par exemple, la structure de protection 18 est configurée pour présenter, dans l'état actif, un partie de protection supérieure comprenant :
- deux manchons tubulaires longitudinaux 19 s'étendant de part et d'autre de la tête 3 de l'utilisateur 1,
- deux manchons tubulaires verticaux 20 s'étendant respectivement depuis des extrémités avants des manchons tubulaires longitudinaux 19 pour être situés en regard du visage de l'utilisateur 1 et d'une partie supérieure du thorax,
- un manchon tubulaire transversal 21 s'étendant entre des extrémités arrières des manchons tubulaires longitudinaux 19 pour être situé derrière la tête 3 de l'utilisateur, au-dessus des vertèbres cervicales.

Le cas échéant, la partie de protection supérieure peut être complétée par une partie de protection dorsale configurée pour s'étendre dans le dos de l'utilisateur 1 dans l'état actif de la structure de protection 18.

Un système de protection de ce type est décrit dans la demande de brevet FR 20 03066 déposée le 27 mars 2020 au nom du même demandeur que la présente demande de brevet.

L'invention n'est pas limitée à une structure de protection 18 présentant une configuration telle que décrite précédemment. Elle s'applique à tout système de protection 15 comprenant un support 16 sous toute forme appropriée, destiné à être porté par l'utilisateur 1 ou destiné à être monté sur le véhicule 5. A cet égard, l'invention s'applique par exemple également à un système de protection du type de celui décrit dans la demande de brevet FR 19 13303 du 27 novembre 2019 au nom du même demandeur que la présente demande de brevet.

Le système de protection 15 comprend également un dispositif d'actionnement 25 connecté à la structure de protection 18 et configuré pour laisser la structure de protection 18 dans l'état inactif tant qu'aucune situation d'accident n'est détectée, et faire passer la structure de protection 18 dans l'état actif lorsqu'une situation d'accident est détectée. En particulier, le dispositif d'actionnement 25 comporte un dispositif de détection 26 configuré pour détecter un ou plusieurs paramètres d'actionnement représentatifs de la situation d'accident.

Selon l'invention, le paramètre d'actionnement ou l'un des paramètres d'actionnement est constitué par une perte de contrôle du véhicule 5, c'est à dire lorsque l'utilisateur 1 lâche l'organe de direction 10 pendant une durée déterminée alors que le véhicule 5 est en déplacement.

Dans un exemple qui ne fait pas partie de l'invention, représenté sur les figures 3 et 4, le dispositif de détection 26 comprend deux liens 30 configurés chacun pour relier l'une des poignées 12 du guidon de direction 11 au poignet 4 correspondant de l'utilisateur 1. Le lien 30 comprend par exemple une boucle 31 enfilée autour du poignet 4 de l'utilisateur 1 et une goupille 32 fixée, par exemple emmanchée, à la poignée 12 du guidon de direction 11 de telle manière que lorsque l'utilisateur 1 lâche le guidon de direction 11, la goupille 32 est détachée du guidon de direction 11 provoquant le déclenchement du système de protection 15 avec le passage de la structure de protection 18 de l'état inactif à l'état actif.

Le dispositif de détection 26 peut alors comprendre un organe de détection de contact 27 électronique configuré pour délivrer un signal d'actionnement représentatif du détachement des goupilles 32 par rapport aux poignées 12 du guidon de direction 11 et ainsi d'une perte du contact des deux mains 2 de l'utilisateur 1 avec le guidon de direction 11. Le dispositif de détection 26 peut également comprendre un organe de détection de déplacement 28 électronique, tel qu'un capteur de vitesse, d'accélération, un dispositif de géolocalisation ou autre, configuré pour délivrer un signal de mouvement représentatif d'un déplacement du vélo 6.

Outre le détachement du lien 30, le paramètre d'actionnement comprend les signaux d'actionnement et de déplacement. Ce paramètre d'actionnement peut être couplé à d'autres paramètres d'actionnement, notamment une décélération.

Le dispositif d'actionnement 25 peut être pourvu de toute interface de communication 29 appropriée, de préférence sans fil, pour permettre le déclenchement de la structure de protection 18 porté par l'utilisateur 1 à partir des signaux d'actionnement et de déplacement délivrés depuis le vélo 6.

Ainsi, comme représenté sur la figure 1, tant qu'aucune situation d'accident n'est détectée, la structure de protection 18 reste dans l'état inactif, repliée sur le sac à dos 17 dans le mode de réalisation représenté.

Sur la figure 2, lorsque l'utilisateur 1 lâche les poignées 12 du guidon de direction 11, les liens 30 sont détachés des poignées 12 conduisant à l'émission du signal d'actionnement qui, une fois combiné au signal de déplacement, constitue le paramètre d'actionnement représentatif de la situation d'accident et conduit au déploiement de la structure de protection 18.

En variante, le lien 30 pourrait être configuré de toute autre manière appropriée, notamment pour être attaché à tout autre emplacement du guidon de direction 11 ou à toute autre partie d'attache de l'utilisateur 1 située au voisinage de ses mains 2. Il pourrait également être configuré pour être détaché de la partie d'attache lorsque l'utilisateur 1 lâche le guidon de direction 11. Par ailleurs, le lien 30, décrit en relation avec un dispositif de détection 26 à la fois mécanique et électronique, pourrait être utilisé dans un dispositif de détection 26 tout électronique comme il apparaitra de la suite de la description ou tout mécanique. Dans ce dernier cas, le lien 30 peut, par exemple, être mis en oeuvre avec un système de percussion libéré lorsque le lien 30 est détaché du guidon de direction 11 ou de l'utilisateur 1.

Dans un autre exemple qui ne fait pas partie de l'invention, représenté sur les figures 5 et 6, le dispositif de détection 26 comprend un actionneur 35 actionnable par l'utilisateur 1 sur chacune des poignées 12. Sur la figure 5, l'actionneur 35 pressé par la main 2 de l'utilisateur 1 est dans une position de contact. Sur la figure 6, l'actionneur 35 est rappelé élastiquement vers une position relâchée lorsque l'utilisateur 1 lâche la poignée 12.

Comme dans l'exemple des figures 3 et 4, l'organe de détection de contact 27 électronique peut être prévu pour délivrer le signal d'actionnement représentatif de l'actionneur 35 dans la position relâchée, et l'organe de détection de déplacement 28 électronique peut être prévu pour délivrer le signal de mouvement représentatif d'un déplacement du vélo 6.

Le paramètre d'actionnement comprend alors l'actionneur 35 dans la position relâchée ainsi que les signaux d'actionnement et de déplacement.

Tout comme dans l'exemple des figures 3 et 4, au lieu de combiner mécanique et électronique, le dispositif de détection 26 pourrait être tout mécanique.

Selon l'invention, le dispositif de détection 26 est tout électronique. Il comprend l'organe de détection de contact 27 électronique configuré pour délivrer le signal d'actionnement et l'organe de détection de déplacement 28 électronique configuré pour délivrer le signal de mouvement.

L'organe de détection de contact 27 comprend un ou plusieurs capteurs électroniques 40 de tout type approprié pour détecter l'absence de contact des deux mains 2 de l'utilisateur 1 avec le guidon de direction 11. Il peut s'agir par exemple d'un capteur de pression, d'un capteur de force, d'un capteur de proximité détectant la présence de la main de l'utilisateur sur la poignée par l'intermédiaire d'un champ électrique, magnétique ou électromagnétique, d'un capteur de température, d'un capteur optique ou autre. L'organe de détection de contact 27 comprend également une unité de commande 50 électronique connectée au capteur électronique 40 et configurée pour émettre le signal d'actionnement lorsque l'absence de contact des deux mains 2 de l'utilisateur 1 avec l'organe de direction 10 est détectée.

Quant à l'organe de détection de déplacement 28, comme décrit précédemment, il peut comprendre un ou plusieurs capteurs électroniques de tout type approprié pour détecter un déplacement du vélo 6. Il peut s'agir par exemple d'un capteur de vitesse, d'accélération, d'un dispositif de géolocalisation ou autre.

Sur les figures 7 et 8 illustrant un exemple qui ne fait pas partie de l'invention, les capteurs électroniques sont agencés selon deux lignes de contact parallèles à un axe central P de la poignée 12, de part et d'autre du guidon de direction 11, en particulier située à l'avant et à l'arrière de la poignée 12. Ainsi, en montée, l'utilisateur 1 exerçant une traction sur le guidon de direction 11 favorise un contact à l'avant du guidon de direction 11 de sorte que la perte de ce contact est plus représentative de la perte de contrôle du vélo 6 que la perte du contact à l'arrière du guidon de direction 11. A l'inverse, en descente, l'utilisateur 1 exerçant une poussée sur le guidon de direction 11 favorise un contact à l'arrière du guidon de direction 11 de sorte que la perte de ce contact est plus représentative de la perte de contrôle du vélo 6 que la perte du contact à l'avant du guidon de direction 11. Néanmoins, en variante, une seule ligne de contact ou plus de deux lignes de contact ou tout autre agencement d'un ou plusieurs capteurs électroniques 40 pourraient être prévus. Par exemple, les capteurs électroniques pourraient être agencés selon une ou plusieurs lignes de contact configurées pour s'étendre autour de l'axe central P.

Selon une autre variante représentée sur la figure 9 et qui ne fait pas partie de l'invention, les capteurs électroniques 40 peuvent être placés sur un équipement 45 porté par l'utilisateur 1, tel que des gants 46.

Dans le mode de réalisation de l'invention représenté sur les figures 10 à 12, le capteur électronique 40 est un capteur optique 41 présentant une surface de détection 42 et configuré pour détecter une modification d'intensité lumineuse sur la surface de détection 42. L'unité de commande 50 est configurée pour émettre le signal d'actionnement lorsqu'une modification d'intensité lumineuse sur la surface de détection 42 est détectée.

En particulier, le système de protection 15 comprend deux manchons de fixation 45 configurés pour être montés de manière amovible respectivement sur les poignées 12 et un boîtier 51 étant configuré pour être monté de manière amovible sur une partie centrale du guidon de direction 11, entre les poignées 12. Chacun des manchons de fixation 45 porte un capteur optique 41 avec la surface de détection 42 orientée vers l'assise 14, et le boîtier 51 enferme l'unité de commande 50. Les manchons de fixation 45 comprennent une bande en matériau déformable, éventuellement de manière élastique, par exemple en caoutchouc. La bande est ouverte et pourvue d'éléments d'accrochage réversibles, tels que des éléments textiles à boucles et crochets, à ses extrémités opposées. La bande est configurée pour enserrer une surface périphérique de la poignée. En variante, la bande pourrait être annulaire et emmanchée sur la poignée 12. La bande est par exemple surmoulée sur le capteur optique 41.

Les figures 13 à 15 représentent une variante du mode de réalisation de l'invention des figures 10 à 12 dans laquelle chaque manchon de fixation 45 comprend deux bandes reliées par une traverse sur laquelle le capteur optique 41 est placé.

## Revendications

1. Système de protection (15) d'un utilisateur (1) circulant sur un véhicule (5) pourvu d'un organe de direction (10), l'organe de direction (10) étant configuré pour modifier une direction de déplacement (D) du véhicule, le système de protection (15) comprenant :
- une structure de protection (18) gonflable présentant un état inactif dans lequel ladite structure de protection (18) est dégonflée, et un état actif dans lequel ladite structure de protection (18) est gonflée en étant configurée pour protéger au moins une partie du corps de l'utilisateur (1),
- un dispositif d'actionnement (25) connecté à la structure de protection (18), le dispositif d'actionnement (25) étant configuré pour laisser la structure de protection (18) dans l'état inactif tant qu'aucune situation d'accident n'est détectée, et faire passer la structure de protection (18) dans l'état actif lorsqu'une situation d'accident est détectée, le dispositif d'actionnement (25) comportant un dispositif de détection (26) configuré pour détecter au moins un paramètre d'actionnement représentatif de la situation d'accident,
dans lequel le dispositif de détection (26) est configuré pour détecter une perte de contrôle du véhicule (5) comme paramètre d'actionnement, lorsque l'utilisateur (1) lâche l'organe de direction (10) pendant une durée déterminée alors que le véhicule (5) est en déplacement, le dispositif de détection (26) comprenant un organe de détection de contact (27) électronique configuré pour délivrer un signal d'actionnement représentatif d'une absence de contact des deux mains (2) de l'utilisateur (1) avec l'organe de direction (10), et un organe de détection de déplacement (28) électronique configuré pour délivrer un signal de mouvement représentatif d'un déplacement du véhicule (5), le paramètre d'actionnement comprenant les signaux d'actionnement et de déplacement,
dans lequel l'organe de détection de contact (27) comprend au moins un capteur électronique (40) configuré pour détecter l'absence de contact des deux mains (2) de l'utilisateur (1) avec l'organe de direction (10), et une unité de commande (50) électronique connectée au capteur électronique (40) et configurée pour émettre le signal d'actionnement lorsque l'absence de contact des deux mains (2) de l'utilisateur (1) avec l'organe de direction (10) est détectée,
le système de protection (15) étant **caractérisé en ce qu'**il comprend au moins un manchon de fixation (45) portant le capteur électronique (40), et un boîtier (51) enfermant l'unité de commande (50), le manchon de fixation (45) et le boîtier (51) étant configurés pour être montés de manière amovible sur l'organe de direction (10).

2. Système de protection (15) selon la revendication 1, dans lequel le capteur électronique (40) est un capteur optique (41) présentant une surface de détection (42) et configuré pour détecter une modification d'intensité lumineuse sur la surface de détection (42), l'unité de commande (50) étant configurée pour émettre le signal d'actionnement lorsqu'une modification d'intensité lumineuse sur la surface de détection (42) est détectée.

3. Système de protection (15) selon la revendication 1 ou 2, dans lequel, lorsque l'organe de direction (10) est un guidon de direction (11) pourvu de deux poignées (12) destinées à être saisies par les mains (2) de l'utilisateur (1), le système de protection (15) comprend deux desdits manchons de fixation (45) configurés pour être montés de manière amovible respectivement sur les poignées (12), le boîtier (51) étant configuré pour être monté de manière amovible sur une partie centrale du guidon de direction (11).

4. Ensemble comprenant un véhicule (5) et un système de protection (15) selon l'une quelconque des revendications 1 à 3, le véhicule (5) étant pourvu d'un organe de direction (10) configuré pour modifier une direction de déplacement (D) du véhicule (5).

5. Ensemble selon la revendication 4 lorsqu'elle dépend de la revendication 2, dans lequel le véhicule (5) comprend une assise (14) destinée à recevoir l'utilisateur (1), le capteur électronique (40) étant monté sur l'organe de direction (10) et la surface de détection (42) étant orientée vers l'assise (14) du véhicule (1).

6. Ensemble selon l'une quelconque des revendications 4 et 5, dans lequel l'organe de direction (10) est un guidon de direction (11) pourvu de deux poignées (12) destinées à être saisies par les mains (2) de l'utilisateur (1), le véhicule (5) comportant un châssis (7) s'étendant selon une direction longitudinale (L) et présentant une partie avant (8) pourvue d'un pivot (9), et une roue directrice (13) montée pivotante sur le guidon de direction (11) selon un axe de roue (R) perpendiculaire à la direction de déplacement (D), le guidon de direction (11) étant monté pivotant sur le pivot (9) du châssis (7).

7. Utilisation d'un système de protection (15) selon l'une quelconque des revendications 1 à 3 pour protéger un utilisateur (1) circulant sur un véhicule (5) pourvu d'un organe de direction (10), l'organe de direction (10) étant configuré pour modifier une direction de déplacement (D) du véhicule (5), l'utilisation prévoyant de :
- laisser la structure de protection (18) dans l'état inactif tant qu'aucune situation d'accident n'est détectée, et
- faire passer la structure de protection (18) dans l'état actif lorsqu'une situation d'accident est détectée, le dispositif de détection (26) détectant une perte de contrôle du véhicule (5) comme paramètre d'actionnement représentatif de la situation d'accident, lorsque l'utilisateur (1) lâche l'organe de direction (10) pendant une durée déterminée alors que le véhicule (5) est en déplacement.

## Patentansprüche

1. Schutzsystem (15) für einen Benutzer (1), der auf einem Fahrzeug (5) fährt, das mit einem Lenkelement (10) versehen ist, wobei das Lenkelement (10) dazu ausgebildet ist, eine Fahrtrichtung (D) des Fahrzeugs zu ändern, wobei das Schutzsystem (15) umfasst:
- eine aufblasbare Schutzstruktur (18) mit einem inaktiven Zustand, in dem die Schutzstruktur (18) nicht aufgeblasen ist, und einem aktiven Zustand, in dem die Schutzstruktur (18) aufgeblasen ist, wobei sie dazu ausgebildet ist, wenigstens einen Teil des Körpers des Benutzers (1) zu schützen,
- eine Betätigungsvorrichtung (25), die mit der Schutzstruktur (18) verbunden ist, wobei die Betätigungsvorrichtung (25) dazu ausgebildet ist, die Schutzstruktur (18) in dem inaktiven Zustand zu belassen, solange keine Unfallsituation erkannt wird, und die Schutzstruktur (18) in den aktiven Zustand zu überführen, wenn eine Unfallsituation erfasst wird, wobei die Betätigungsvorrichtung (25) eine Erfassungsvorrichtung (26) aufweist, die dazu ausgebildet ist, wenigstens einen für die Unfallsituation repräsentativen Betätigungsparameter zu erfassen,
wobei die Erfassungsvorrichtung (26) dazu ausgebildet ist, einen Verlust der Kontrolle über das Fahrzeug (5) als Betätigungsparameter zu erfassen, wenn der Benutzer (1) das Lenkelement (10) für eine bestimmte Zeitdauer loslässt, während das Fahrzeug (5) in Bewegung ist, wobei die Erfassungsvorrichtung (26) ein elektronisches Berührungserfassungselement (27) umfasst, das dazu ausgebildet ist, ein Betätigungssignal auszugeben, das repräsentativ für eine fehlende Berührung beider Hände (2) des Benutzers (1) mit dem Lenkelement (10) ist, und ein elektronisches Bewegungserfassungselement (28) umfasst, das dazu ausgebildet ist, ein Bewegungssignal auszugeben, das repräsentativ für eine Bewegung des Fahrzeugs (5) ist, wobei der Betätigungsparameter die Betätigungs- und Bewegungssignale umfasst,
wobei das Berührungserfassungselement (27) wenigstens einen elektronischen Sensor (40) umfasst, der dazu ausgebildet ist, zu erfassen, dass beide Hände (2) des Benutzers (1) nicht mit dem Lenkelement (10) in Kontakt sind, und eine elektronische Steuereinheit (50), die mit dem elektronischen Sensor (40) verbunden und dazu ausgebildet ist, das Betätigungssignal auszugeben, wenn der fehlende Kontakt der beiden Hände (2) des Benutzers (1) mit dem Lenkelement (10) erfasst wird, wobei das Schutzsystem (15) **dadurch gekennzeichnet ist, dass** es wenigstens eine Befestigungshülse (45) umfasst, die den elektronischen Sensor (40) trägt, und ein Gehäuse (51), das die Steuereinheit (50) umschließt, umfasst, wobei die Befestigungshülse (45) und das Gehäuse (51) dazu ausgebildet sind, dass sie abnehmbar an dem Lenkelement (10) angebracht werden können.

2. Schutzsystem (15) nach Anspruch 1, wobei der elektronische Sensor (40) ein optischer Sensor (41) ist, der eine Erfassungsfläche (42) aufweist und dazu ausgebildet ist, eine Änderung der Lichtintensität auf der Erfassungsfläche (42) zu erfassen, wobei die Steuereinheit (50) dazu ausgebildet ist, das Betätigungssignal auszugeben, wenn eine Änderung der Lichtintensität auf der Erfassungsfläche (42) erfasst wird.

3. Schutzsystem (15) nach Anspruch 1 oder wobei, wenn das Lenkelement (10) eine Lenkstange (11) ist, die mit zwei Griffen (12) versehen ist, die dazu bestimmt sind, von den Händen (2) des Benutzers (1) ergriffen zu werden, das Schutzsystem zwei der Befestigungshülsen (45) umfasst, die dazu ausgebildet sind, jeweils abnehmbar an den Griffen (12) angebracht werden zu können, wobei das Gehäuse (51) dazu ausgebildet ist, abnehmbar an einem Mittelteil der Lenkstange (11) angebracht zu werden.

4. Anordnung mit einem Fahrzeug (5) und einem Schutzsystem (15) nach einem der Ansprüche 1 bis 3, wobei das Fahrzeug (5) mit einem Lenkelement (10) versehen ist, das dazu ausgebildet ist, eine Fahrtrichtung (D) des Fahrzeugs (5) zu ändern.

5. Anordnung nach Anspruch 4, sofern sie von Anspruch 2 abhängt, wobei das Fahrzeug (5) eine Sitzfläche (14) zur Aufnahme des Benutzers (1) aufweist, wobei der elektronische Sensor (40) an dem Lenkelement (10) angebracht ist und die Sensorfläche (42) auf die Sitzfläche (14) des Fahrzeugs (1) gerichtet ist.

6. Anordnung nach einem der Ansprüche 4 oder 5, wobei das Lenkelement (10) eine Lenkstange (11) ist, die mit zwei Griffen (12) versehen ist, die dazu bestimmt sind, von den Händen (2) des Benutzers (1) ergriffen zu werden, wobei das Fahrzeug (5) einen Rahmen (7) umfasst, der sich in einer Längsrichtung (L) erstreckt und einen vorderen Teil (8) aufweist, der mit einem Drehzapfen (9) versehen ist, und ein Lenkrad (13), das an der Lenkstange (11) um eine Radachse (R) senkrecht zur Fahrtrichtung (D) schwenkbar angebracht ist, wobei die Lenkstange (11) schwenkbar an dem Drehzapfen (9) des Rahmens (7) angebracht ist.

7. Verwendung eines Schutzsystems (15) nach einem der Ansprüche 1 bis 3 zum Schutz eines Benutzers (1), der auf einem Fahrzeug (5) fährt, das mit einem Lenkelement (10) versehen ist, wobei das Lenkelement (10) dazu ausgebildet ist, eine Fahrtrichtung (D) des Fahrzeugs (5) zu ändern, wobei die Verwendung vorsieht, dass:
- die Schutzstruktur (18) im inaktiven Zustand belassen wird, solange keine Unfallsituation erfasst wird, und
- die Schutzstruktur (18) in den aktiven Zustand überführt wird, wenn eine Unfallsituation erfasst wird, wobei die Erfassungsvorrichtung (26) einen Verlust der Kontrolle über das Fahrzeug (5) als einen für die Unfallsituation repräsentativen Betätigungsparameter erfasst, wenn der Benutzer (1) das Lenkelement (10) für eine bestimmte Zeitdauer loslässt, während sich das Fahrzeug (5) in Bewegung befindet.

## Claims

1. A system (15) for protecting a user (1) travelling on a vehicle (5) provided with a steering member (10), the steering member (10) being configured to change a direction of movement (D) of the vehicle, the protection system (15) comprising:
- an inflatable protective structure (18) having an inactive state wherein said protective structure (18) is deflated, and an active state wherein said protective structure (18) is inflated while being configured to protect at least a part of the user's body (1),
- an actuation device (25) connected to the protection structure (18), the actuation device (25) being configured to leave the protection structure (18) in the inactive state as long as no accident condition is detected, and switch the protective structure (18) to the active state when an accident condition is detected, the actuation device (25) including a detection device (26) configured to detect at least one actuation parameter representative of the accident condition,
wherein the detection device (26) is configured to detect a loss of control of the vehicle (5) as an actuation parameter, when the user (1) lets go of the steering member (10) for a determined period while the vehicle (5) is moving, the detection device (26) comprising an electronic contact detection device (27) configured to deliver an actuation signal representative of an absence of contact of the two hands (2) of the user (1) with the steering member (10), and an electronic movement detection member (28) configured to deliver a movement signal representative of a movement of the vehicle (5), the actuation parameter comprising the actuation and movement signals,
wherein the contact detection member (27) comprises at least one electronic sensor (40) configured to detect the absence of contact of the two hands (2) of the user (1) with the steering member (10), and an electronic control unit (50) connected to the electronic sensor (40) and configured to emit the actuation signal when the absence of contact of the two hands (2) of the user (1) with the steering member (10) is detected, the protection system (15) being **characterised in that** it comprises at least one fixing sleeve (45) bearing the electronic sensor (40), and a casing (51) enclosing the control unit (50), the fixing sleeve (45) and the casing (51) being configured to be removably mounted on the steering member (10).

2. The protection system (15) according to claim 1, wherein the electronic sensor (40) is an optical sensor (41) having a detection surface (42) and configured to detect a change in light intensity on the detection surface (42), the control unit (50) being configured to emit the actuation signal when a change in light intensity on the detection surface (42) is detected.

3. The protection system (15) according to claim 1 or 2, wherein, when the steering member (10) is a steering handlebar (11) provided with two handles (12) intended to be grasped by the hands (2) of the user (1), the protection system (15) comprises two of said fixing sleeves (45) configured to be removably mounted respectively on the handles (12), the casing (51) being configured to be removably mounted on a central part of the steering handlebar (11).

4. An assembly comprising a vehicle (5) and a protection system (15) according to any one of claims 1 to 3, the vehicle (5) being provided with a steering member (10) configured to change a direction of movement (D) of the vehicle (5).

5. The assembly according to claim 4 when dependent on claim 2, wherein the vehicle (5) comprises a seat (14) intended to receive the user (1), the electronic sensor (40) being mounted on the steering member (10) and the detection surface (42) being oriented towards the seat (14) of the vehicle (1).

6. The assembly according to any one of claims 4 and 5, wherein the steering member (10) is a steering handlebar (11) provided with two handles (12) intended to be grasped by the hands (2) of the user (1), the vehicle (5) including a frame (7) extending in a longitudinal direction (L) and having a front part (8) provided with a pivot (9), and a steering wheel (13) pivotally mounted on the steering handlebar (11) along a wheel axis (R) perpendicular to the direction of movement (D), the steering handlebar (11) being pivotally mounted on the pivot (9) of the frame (7).

7. A use of a protection system (15) according to any one of claims 1 to 3 to protect a user (1) travelling on a vehicle (5) provided with a steering member (10), the steering member (10) being configured to change a direction of movement (D) of the vehicle (5), the use providing for:
- leaving the protection structure (18) in the inactive state as long as no accident situation is detected, and
- causing the protection structure (18) to switch into the active state when an accident situation is detected, the detection device (26) detecting a loss of control of the vehicle (5) as an actuation parameter representative of the accident condition, when the user (1) releases the steering member (10) for a determined period while the vehicle (5) is moving.
